# EUROPEAN PATENT SPECIFICATION

(11) **EP 3 573 133 B1**
(45) Date of publication and mention of the grant of the patent: **03.03.2021**
(21) Application number: 19175404.3
(22) Date of filing: 20.05.2019
(51) Int. Cl.: H01M 2/10, B60R 16/04

(54) **BATTERY HOLDING STRUCTURE**
BATTERIEHALTESTRUKTUR
STRUCTURE DE SUPPORT DE BATTERIE

(30) Priority: 23.05.2018 JP 2018098767
(43) Date of publication of application: 27.11.2019
(73) Proprietor: TOYOTA JIDOSHA KABUSHIKI KAISHA, Toyota-Shi, Aichi-Ken 471-8571 (JP)
(72) Inventor: KUNISHI, Daichi, TOYOTA-SHI, AICHI-KEN 471-8571 (JP); NAGURA, Hiroyuki, TOYOTA-SHI, AICHI-KEN 471-8571 (JP); NAGAOKA, Yasushi, TOYOTA-SHI, AICHI-KEN 471-8571 (JP); MOTOJI, Yuya, TOYOTA-SHI, AICHI-KEN 471-8571 (JP); KAJI, Yujiro, TOYOTA-SHI, AICHI-KEN 471-8571 (JP); AKASHIO, Muneo, TOYOTA-SHI, AICHI-KEN 471-8571 (JP)
(74) Representative: Cabinet Beau de Loménie

(56) References cited:
- EP-A1- 3 493 294
- DE-C1- 19 961 853
- JP-A- 2016 168 965
- US-B1- 6 230 834

## Description

### TECHNICAL FIELD

The present disclosure relates to a battery holding structure for fixing an on-vehicle battery, which is accommodated in a substantially boxlike carrier, with a clamp.

### BACKGROUND

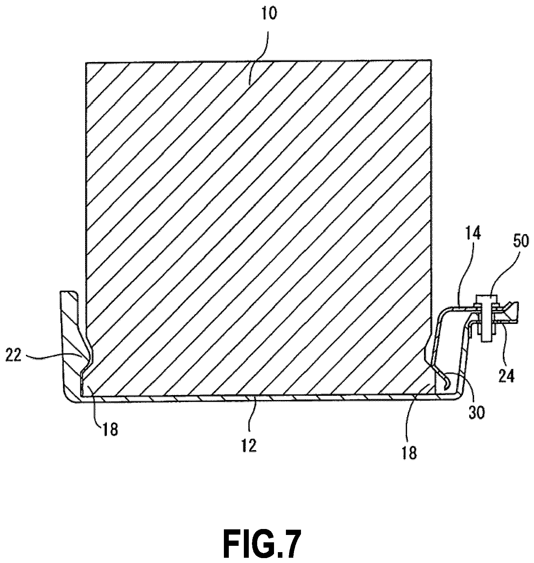

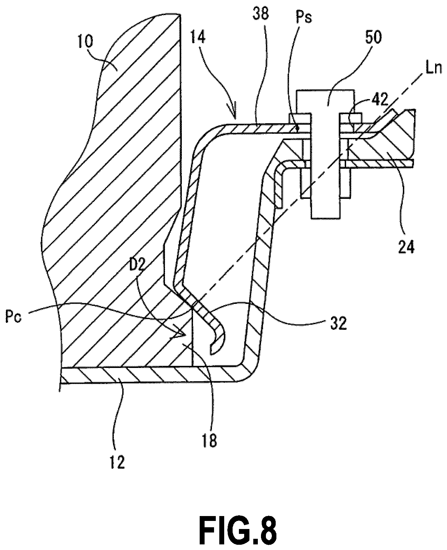

There is a conventionally proposed holding structure for accommodating a battery to be mounted on a vehicle in a boxlike carrier, and fixing the battery with a clamp. FIG. 7 is a view illustrating a holding structure disclosed in Patent Literature 1. FIG. 8 is an enlarged view of an essential part illustrated in FIG. 7. As illustrated in FIGS. 7 and 8, a brim 18 protruding outward is provided as a lower part of a battery. A carrier has an engagement bulge 22 protruding from one peripheral wall toward the battery, so that the engagement bulge 22 overhangs on an upper surface of the brim 18. Further, the carrier has an opposing other peripheral wall separated from the battery 10, and a clamp 14 is interposed between this opposing peripheral wall and the battery 10.

The clamp 14 is screwed and fastened to a flange 24 of the carrier 12 with a fastening bolt 50. Further, the clamp 14 has a first contacting part 30 that comes into contact with the brim 18 and presses the brim 18 obliquely from above. By screwing and fastening the clamp 14 to the carrier 12 in a state where the battery 10 is pressed against the one peripheral wall and further the brim 18 is pressed by the first contacting part 30, the battery 10 can be restricted from moving and the battery can be held.

### CITATION LIST

### PATENT LITERATURE

Patent Literature 1 JP 2016-168965 A

However, according to the configuration disclosed in Patent Literature 1, when the end part (the brim 18) of the battery 10 floats upward due to vibrations or inertial forces acting at the time of a vehicle collision, there is a possibility that the holding force by the clamp 14 may be released or lowered. More specifically, when the end part of the battery 10 floats upward, a vertical drag acts on the first contacting part 30 pressing the brim 18.

The vertical drag is a force passing through a contact point Pc between the brim 18 and the first contacting part 30, and acting in a direction orthogonal to the upper surface of the brim 18. A reference normal line Ln in FIG. 8 indicates the direction of the vertical drag. According to the conventional holding structure, the vertical drag is in a positional relationship whereby it passes outside a fixing point Ps of the clamp 14. In such a positional relationship, when receiving the vertical drag from the brim 18, the clamp 14 is swung or distorted in such a manner that the first contacting part 30 moves downward obliquely (in the direction of arrow D2 in FIG. 8). The movement of the first contacting part 30 is a movement in a direction along which the first contacting part 30 separates from the brim 18. As a result, according to the conventional holding structure, when the end part of the battery 10 floats upward, the clamp 14 and the brim 18 are likely to be disengaged from each other. In other words, according to the conventional holding structure, when the end part of the battery floats upward, appropriately holding the battery is difficult.

### SUMMARY

In view of the above, the present disclosure intends to provide a battery holding structure capable of appropriately and continuously holding a battery even when an end part of the battery floats upward due to vibrations or inertial forces acting at the time of collision.

Battery holding structures according to the present invention are defined in the claims.

The present disclosure related to a battery holding structure which includes a battery, typically adapted to be mounted on a vehicle, and including a brim provided at a lower part thereof so as to protrude outward, a carrier including a main body accommodating at least a lower part of the battery and a flange extending outward from an upper end of the main body, and a clamp for fixing the battery to the carrier. An upper surface of the brim is an inclined surface that extends downward as approaching outward. The clamp includes a first contacting part that comes in contact with the inclined surface positioned at one end in a first direction of the battery and presses a bottom of the battery against the carrier, a first standing part standing from the first contacting part, and a fastening part extending from the first standing part so as to be overlapped with the flange and fastened to the flange at a position outside the battery in the first direction. A normal line of the inclined surface passing through a contact point between the inclined surface and the first contacting part passes inside a fixing point where the fastening part is fixed to the flange so as to be positioned on a battery side.

When the normal line of the inclined surface passing through the contact point between the inclined surface and the first contacting part passes inside the point where the fastening part is fixed to the flange so as to be positioned on the battery side, the clamp is swung or distorted around the fixing point in a direction in which the first contacting part floats upward when the battery floats upward. As a result, the first contacting part can follow the upper surface of the brim having floated upward, and the battery can be prevented from further floating upward. As a result, even when the end part of the battery floats upward due to vibrations or inertial forces acting at the time of collision, the battery can be appropriately and continuously held.

In this case, the first contacting part may extend from a lower end of the first standing part at an angle closer to a horizontal direction than the inclined surface.

When the angle of the first contacting part is set to be closer to the horizontal direction than the inclined surface, the first contacting part can come into contact with the vicinity of the upper end thereof. In addition, when the contact point is positioned high up and close to the battery, the normal line of the inclined surface passing through the contact point is likely to pass inside the fixing point so as to be positioned on the battery side.

Further, the fastening part may include a fastening hole through which a fastening bolt can be inserted, and the fixing point may be a point closest to the battery in a peripheral region of the fastening hole.

When an upward force is applied to the contacting part, the clamp is swung or distorted around the point closer to the battery in the peripheral region of the fastening hole. Accordingly, setting this point as the "fixing point" and designing the positional relationship between the contact point and the fixing point can cause the clamp to perform desired behavior.

Moreover, the clamp may further include a second contacting part that comes into contact with the inclined surface positioned at one end in a second direction orthogonal to the first direction and presses the bottom of the battery against the carrier, and a second standing part that extends upward from the second contacting part and is connected to the first standing part so as to form an angle of approximately 90 degrees therebetween, wherein the clamp is not fastened to the carrier at an outer side of the battery in the second direction.

Providing the second contacting part can restrict the movement of the battery not only in the first direction but also in the second direction. On the other hand, fastening the clamp at one point at an outer side in the second direction without fastening the clamp to the carrier can permit the swinging or distortion of the clamp around the fixing point. As a result, even when the battery floats upward, appropriately holding the battery is feasible.

Further, a placement part that is inclined in such a way as to extend upward and outward in the first direction may be provided at an outer end of the flange in the first direction, a abutment part that is inclined in such a way as to extend upward and outward in the first direction may be provided at an outer end of the fastening part in the first direction, and the clamp may be fastened to the carrier in a state where the abutment part is mounted on the placement part and the fastening part rise up from the flange.

By employing such a configuration, the position of the clamp on the carrier, namely the position of the clamp on the inclined surface of the first contacting part ,can be adjusted, and accordingly the influence of dimensional variations of the battery and the carrier can be eliminated. The battery holding structure according to the present disclosure can appropriately and continuously hold the battery even when an end part of the battery floats upward due to vibrations or inertial forces acting at the time of collision.

### BRIEF DESCRIPTION OF DRAWINGS

Embodiments of the present disclosure will be described based on the following figures, wherein:
FIG. 1 is a perspective view of a battery holding structure;
FIG. 2 is a cross-sectional view illustrating the battery holding structure including a clamp;
FIG. 3 is an enlarged view of a portion A illustrated in FIG. 2;
FIG. 4 is a perspective view of a clamp;
FIG. 5 illustrates a state where a front part of a battery has crept up;
FIG. 6 illustrates an example of another battery holding structure;
FIG. 7 illustrates an example of a conventional battery holding structure; and
FIG. 8 is an enlarged view illustrating an essential part of FIG. 7.

### DESCRIPTION OF PREFERRED EMBODIMENTS

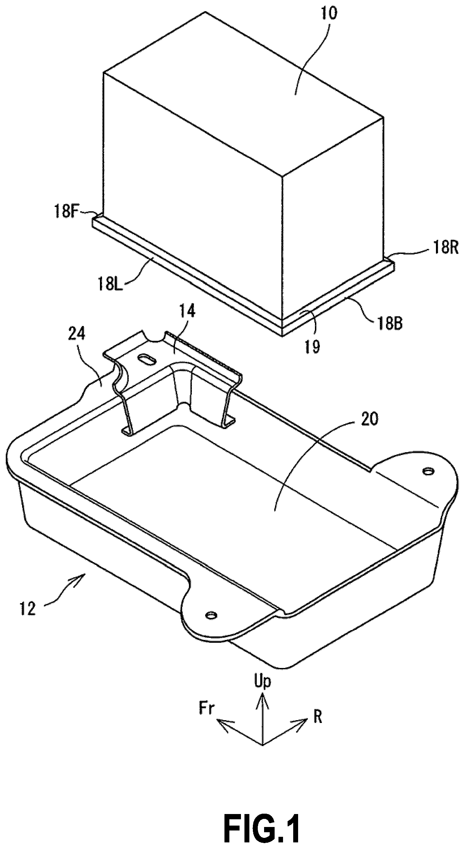

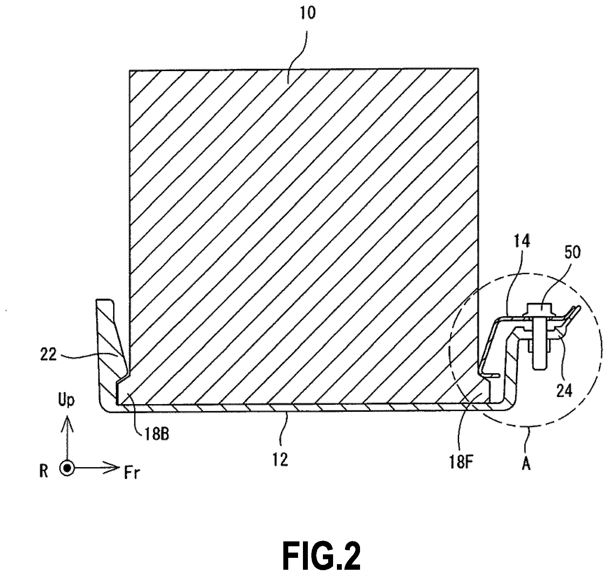

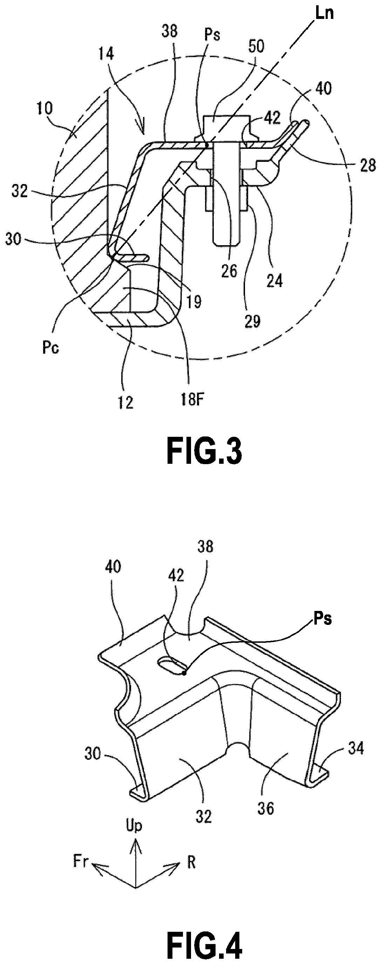

Hereinafter, examples of a holding structure for a battery 10 will be described with reference to attached drawings. FIG. 1 is a perspective view illustrating the holding structure for the battery 10. In FIG. 1, although the clamp 14 is attached to the carrier 12 in a state where the battery 10 is separated from the carrier 12, the time at which the clamp 14 is actually attached to the carrier 12 is not earlier than accommodating the battery 10 in the carrier 12. FIG. 2 is a cross-sectional view illustrating the holding structure including the clamp. FIG. 3 is an enlarged view of a portion A illustrated in FIG. 2. In the following drawings, "Fr", "Up", and "R" represent the front, upper, and right sides of a vehicle, respectively. The front, rear, left, and right of the vehicle are directions visually recognized by a driver when seated therein.

The battery 10 is, for example, an auxiliary battery that supplies electric power to electrical equipment of the vehicle, a starter motor for an engine, and the like. The battery 10 is disposed in a space other than a passenger compartment of the vehicle, such as a trunk or a power unit compartment (which may be referred to as an engine compartment), in a state where the battery 10 is held by the holding structure. After being placed on the carrier 12, the battery 10 is fixed to the carrier 12 with the clamp 14. Further, the carrier 12 is fastened to another member of the vehicle (for example, a vehicle body, a framework member, or the like).

As illustrated in FIG. 1, the battery 10 has a substantially rectangular parallelepiped shape and includes brims 18F, 18L, 18R, and 18B provided at a lower part thereof so as to protrude outward. The brims 18F, 18L, 18R, and 18B are provided on all four sides of the battery 10. In the following description, the brims protruding from the front, rear, right, and left surfaces of the battery 10 are referred to as "front brim 18F', "rear brim 18B", "right brim 18R", and "left brim 18L", respectively. Further, when it is unnecessary to discriminate the front, rear, left, and right directions, respective brims 18F, 18B, 18L, and 18R are simply referred to as "brims 18". Each brim 18 has an upper surface formed as an inclined surface 19 that becomes lower toward the outside in the horizontal direction.

The carrier 12 is a member on which the battery 10 can be placed, and has a substantially boxlike main body 20 that can accommodate a part of the battery 10 and a flange 24 that horizontally protrudes from a peripheral edge of the main body 20. The carrier 12 is made of a resin or the like and can be formed, for example, by injection molding. The carrier 12 can be fixed to the vehicle body or the like by means of screwing or the like.

The main body 20 has a substantially rectangular shape that is long in the back-and-forth direction in plan view. The planar size of the main body 20 is sufficiently larger than the planar size of the battery 10. Accordingly, when the battery 10 is placed inside the main body 20, certain spaces are formed on the front, rear, left, and right sides of the battery 10. While the battery 10 is not fixed yet by the clamp 14, the battery 10 can freely slide in the main body 20 in both the right-and-left direction and the back-and-forth direction.

On each of a rear-end surface and a left-end surface of the main body 20, an engagement bulge 22 protruding inward in the horizontal direction is formed (refer to FIG. 2). The engagement bulge 22 has a bottom surface formed as an inclined surface that becomes lower toward the outside in the horizontal direction. The gradient angle and the height of the engagement bulge 22 are substantially the same as the gradient angle and the height of the upper surface (the inclined surface 19) of the rear brim 18B and the left brim 18L. Accordingly, when the battery 10 is caused to slide until a rear-end surface and a left-end surface of the battery 10 come into contact with the rear-end surface and the left-end surface of the main body 20, the engagement bulge 22 comes to overhang on the inclined surface 19 of each of the rear brim 18B and the left brim 18L. As a result, the rear end and the left end of the battery 10 can be prevented from floating upward.

The flange 24 protrudes outward from the front end and the right end of the main body 20. A fastening part 38 of the clamp 14, which will be described below, is overlapped on a right front part of the flange 24. In the region overlapped with the fastening part 38, the flange 24 has a fastening hole 26 penetrating in the vertical direction. Further, on a back surface of the flange 24, a nut 29 with a female thread is fixed so as to be coaxial with the fastening hole 26. The front end (distal end) of the flange 24 is inclined in such a way as to extend upward and forward. As described below, since a part of the clamp 14 is placed on this inclined portion, this inclined portion is hereinafter referred to as "placement part 28".

The clamp 14 is a member that presses and fixes one corner of the battery 10, namely a right front corner of the battery 10 in the present embodiment, against the carrier 12. The clamp 14 will be described in detail below with reference to FIGS. 3 and 4. FIG. 4 is a perspective view of the clamp 14.

The clamp 14 has a substantially L-shaped configuration along the corner of the carrier 12 in plan view. More specifically, the clamp 14 includes a first standing part 32 and a first contacting part 30 positioned on the front side of the battery 10, a second standing part 36 and a second contacting part 34 positioned on the right side of the battery 10, and the fastening part 38 overlapped on the flange 24.

The first standing part 32 is a part standing between a front-end wall of the carrier 12 and a front-end surface of the battery 10 and inclined in such a way as to be closer to the battery 10 towards the bottom. The first standing part 32 has a lower end folded outward so as to constitute the first contacting part 30. The first contacting part 30 is a part that comes into contact with the inclined surface 19 of the front brim 18F. The first contacting part 30 extends substantially in the horizontal direction. In other words, the first contacting part 30 extends at an angle closer to the horizontal direction than the inclined surface 19. Employing such a configuration is intended to locate the contact point Pc between the first contacting part 30 and the inclined surface 19 in the vicinity of the upper end of the first contacting part 30, so that the contact point Pc is likely to be positioned relatively upwardly and inwardly (the direction approaching the battery 10).

The second standing part 36 is a part standing between a right-side wall of the carrier 12 and a right-end surface of the battery 10 and inclined in such a way as to be closer to the battery 10 toward the bottom. The second standing part 36 is connected to the first standing part 32 at an angle of approximately 90 degrees. The second standing part 36 has a lower end folded outward so as to constitute the second contacting part 34. Similar to the first contacting part 30, the second contacting part 34 extends in substantially the horizontal direction.

The fastening part 38 extends forward (outward) of the vehicle, from the upper end of the first standing part 32. The fastening part 38 is overlapped on the flange 24 and has a fastening hole 42 provided at the center thereof. The fastening bolt 50 is inserted through the fastening hole 42 and the fastening hole 26 of the flange 24, and is then screwed into the nut 29. As a result, the clamp 14 is fixed to the carrier 12. As illustrated in FIG. 4, the fastening hole 42 is a long hole elongated in the back-and-forth direction of the vehicle (i.e., the first direction), and the position of the clamp 14 with respect to the carrier 12 in the back-and-forth direction of the vehicle is adjustable.

The front end (distal end) of the fastening part 38 is inclined in such a way as to extend upward and forward. This inclined portion serves as a "abutment part 40" to be placed on the placement part 28 of the flange 24. The gradient angle of the abutment part 40 is substantially identical to the gradient angle of the placement part 28. Accordingly, the abutment part 40 can slide and move along the placement part 28 in the back-and-forth direction of the vehicle. In response to this slide motion, the first contacting part 30 moves not only in the back-and-forth direction but also in the up-and-down direction. As a result, the influence of dimensional variations of the battery 10 and the like can be eliminated, as described below.

When an upward force is applied to the first contacting part 30, the clamp 14 is swung or distorted in such a way as to avoid this force. Especially, according to the present embodiment, a slight clearance is formed between the fastening part 38 and the flange 24 in consideration of the relationship between the inclined placement part 28 and the abutment part 40 that is placed thereon. In the state where the fastening part 38 is placed on the flange 24, a part of the fastening part 38 floats in the air. Therefore, the swinging or distortion of the clamp 14 is likely to occur.

The swinging or distortion occurs around a battery-side end point Ps of the fastening hole 42. Since the clamp 14 is fixed to the carrier 12 without causing any distortion at a region outer than the battery-side end point Ps of the fastening hole 42, the battery-side end point Ps functions as the fixing point Ps where the clamp 14 is fixed to the carrier 12. The present embodiment is characterized by setting dimensions of respective parts in such a manner that a normal line (hereinafter referred to as "reference normal line Ln") passing through the contact point Pc between the first contacting part 30 and the inclined surface 19 and orthogonal to the inclined surface 19 passes inside the fixing point Ps so as to be positioned on the battery side. The reason for such dimensional settings will be described below.

Next, an exemplary procedure for assembling the battery 10 according to the above-mentioned holding structure will be described. First, when the battery 10 is assembled on the vehicle, the carrier 12 is fastened to the vehicle. Subsequently, the battery 10 is placed inside the main body 20 of the carrier 12. In this case, the battery 10 is placed at a position slightly separated from the rear-end surface and the left-end surface of the main body 20 so that the rear end and the left end of the battery 10 do not interfere with the engagement bulge 22 of the carrier 12.

Subsequently, when the battery 10 is placed on the main body 20 of the carrier 12, the battery 10 is pushed rearward and leftward so that the rear-end surface of the battery 10 comes into contact with the rear-end surface of the main body 20 and the left-end surface of the battery 10 comes into contact with the left-end surface of the main body 20. As a result, the engagement bulge 22 of the carrier 12 is positioned so as to overhang on the rear brim 18B and the left brim 18L of the battery 10, and therefore the rear end and the left end of the battery 10 can be prevented from floating upward.

Subsequently, the right front corner of the battery 10 is pressed and fixed with the clamp 14. More specifically, the clamp 14 is disposed in such a manner that the first contacting part 30 of the clamp 14 presses the upper surface of the front brim 18F of the battery 10 and the second contacting part 34 of the clamp 14 presses the upper surface of the right brim 18R of the battery 10.

In general, respective members such as the battery 10 and the carrier 12 are not free from dimensional variations occurring due to manufacturing tolerances. Therefore, the distance from the front end of the battery 10 to the front end of the carrier 12 may vary. In such cases, if the attaching position of the clamp 14 on the carrier 12 is constant, the relative positional relationship between the front brim 18F and the first contacting part 30 may vary. For example, in the case of setting the attaching position of the clamp 14 on the carrier 12 to be constant, if the size of the battery 10 becomes smaller due to manufacturing tolerances, the first contacting part 30 may separate from the front brim 18F and the force with which the clamp 14 presses the battery 10 may be weakened.

According to the present embodiment, to eliminate the influence of such manufacturing tolerances, the placement part 28 of the carrier 12 and the abutment part 40 of the clamp 14 are inclined so that the attaching position of the clamp 14 on the carrier 12 is adjustable. For example, when the size of the battery 10 is smaller, the first contacting part 30 can be moved closer to the front brim 18F by causing the abutment part 40 to slide rearward (the direction approaching the battery 10) and downward along the placement part 28. As a result, the battery 10 can be appropriately pressed with the clamp 14. Further, when the size of the battery 10 is larger, the abutment part 40 is caused to slide forward (the direction separating from the battery 10) and upward along the placement part 28. In any case, by inclining the placement part 28 and the abutment part 40, the influence of manufacturing tolerances of the battery 10 and the carrier 12 can be eliminated, and the first contacting part 30 can be reliably placed at an appropriate position to press the upper surface of the front brim 18F.

When the clamp 14 has been disposed at the appropriate position, the fastening bolt 50 is inserted through the fastening holes 42 and 26 to fasten and fix the clamp 14 to the carrier 12. In this state, the assembling of the battery 10 is completed.

In this state, the assembled battery 10 may be subjected to vibrations or inertial forces. For example, while the vehicle is traveling, vibrations will be continuously applied to the battery 10 placed on the vehicle. Further, when the vehicle stops suddenly or when a collision from behind occurs, an inertial force acts on the battery 10 usually so as to cause the front part of the battery 10 to float upward.

In the holding structure according to the present embodiment, the reference normal line Ln passing through the contact point Pc between the first contacting part 30 and the inclined surface 19 and orthogonal to the inclined surface 19 is set to pass inside the fixing point Ps of the clamp 14 so as to be positioned on the battery side, so that the battery 10 can be reliably held even when the front part of the battery 10 floats upward due to vibrations or inertial forces as mentioned above. More specifically, that the clamp 14 pressing the front brim 18F downward receives a vertical drag from the front brim 18F when the front brim 18F of the battery 10 floats upward. The direction of this vertical drag is a direction identical to the reference normal line Ln. Upon receiving such a vertical drag, the clamp 14 is swung or distorted in such a way as to avoid the vertical drag. This swinging or distortion occurs around the fixing point Ps (the battery-side end point in the peripheral region of the fastening hole).

As illustrated in FIG. 8, when the vertical drag (the reference normal line Ln) passes outside the fixing point Ps, the clamp 14 is swung or distorted in such a manner that the first contacting part 30 moves downward obliquely (in the direction of arrow D2 in FIG. 8). In other words, in this case, the first contacting part 30 is swung or distorted in such a manner that the first contacting part 30 separates from the front brim 18F having crept upward. Accordingly, in the case of setting the dimensions so that the vertical drag (the reference normal line Ln) passes outside the fixing point Ps, there is a problem that the battery 10 cannot be appropriately held when the front part of the battery 10 floats upward due to vibrations or inertial forces.

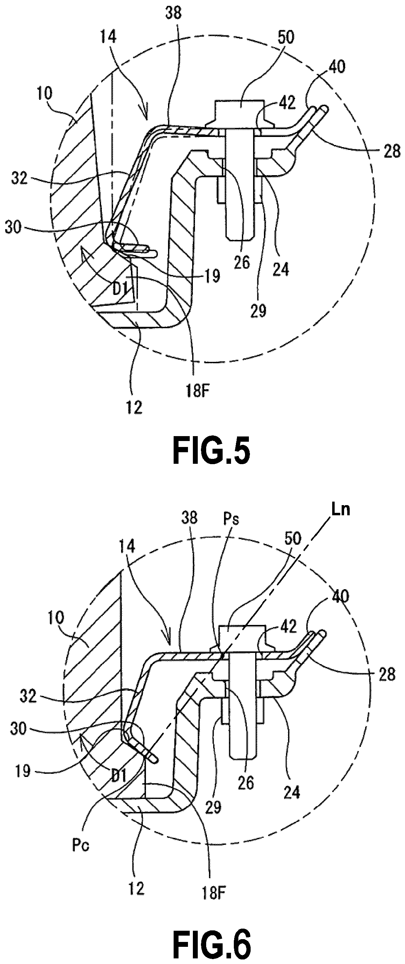

On the other hand, according to the dimensional settings described in the present embodiment in which the vertical drag (the reference normal line Ln) passes inside the fixing point Ps so as to be positioned on the battery side, the clamp 14 is swung or distorted in such a manner that the first contacting part 30 moves upward obliquely (in the direction of arrow D1 in FIG. 5). This direction is substantially identical to the moving direction of the front brim 18F having crept upward. Therefore, by setting the dimensions so that the vertical drag (the reference normal line Ln) passes inside the fixing point Ps so as to be positioned on the battery side, the first contacting part 30 can continuously press the inclined surface 19 and the clamp 14 can appropriately hold the battery 10 even when the front part of the battery 10 floats upward due to vibrations or inertial forces.

In this case, in order to ensure that reference normal line Ln passes inside the fixing point Ps so as to be positioned on the battery side, it is desired that the contact point Pc be positioned as high as possible and close to the battery 10. According to the present embodiment, as mentioned above, the angle of the first contacting part 30 is set to be closer to the horizontal direction than the gradient angle of the inclined surface 19. Therefore, the contact point Pc is likely to be located near the upper end of the first contacting part 30 and eventually on the upper side. As a result, the reference normal line Ln is likely to pass inside the fixing point Ps so as to be positioned on the battery side.

However, as long as the reference normal line Ln passes inside the fixing point Ps so as to be positioned on the battery side, the gradient angle of the inclined surface 19 can be set to be closer to the horizontal direction than the angle of the first contacting part 30 as illustrated in FIG. 6. In this case, although the contact point Pc between the inclined surface 19 and the clamp 14 is likely to be positioned at a lower end of the inclined surface 19, the position of the fixing point Ps can be set lower or outwardly compared to those illustrated in FIGS. 3 and 5 and the reference normal line Ln can pass inside the fixing point Ps so as to be positioned on the battery side. Employing such a configuration can appropriately hold the battery 10 with the clamp 14 since the clamp 14 is swung or distorted in such a manner that the first contacting part 30 moves upward obliquely (in the direction of arrow D1 in FIG. 6), similar to FIGS. 3 and 5.

Further, according to the present embodiment, the second contacting part 34 and the second standing part 36 that cooperatively press the right brim 18R are provided, in addition to the first contacting part 30 and the first standing part 32 that cooperatively press the front brim 18F. As a result, since the battery 10 can be prevented from floating upward in two directions (i.e., the front side and the right side), excessive floating of the battery 10 can be relibly prevented. Further, according to the present embodiment, the clamp 14 is not fastened to the carrier 12 on the right side of the battery 10. In other words, the clamp 14 is fastened at one point. As a result, the clamp 14 can be flexibly swung or distorted around the single fixing point Ps, and the clamp 14 can appropriately hold the battery 10 even when the battery 10 floats upward.

The above-mentioned embodiments are mere examples, and as long as the normal line (the reference normal line Ln) of the inclined surface 19 passing through the contact point Pc between the inclined surface 19 and the first contacting part 30 can pass inside the fixing point Ps where the fastening part 38 is fastened to the flange 24 so as to be positioned on the battery side, the remaining configurations can be appropriately modified. Further, the placement part 28 and the abutment part 40 may be omitted as long as sufficient dimensional accuracy can be assured to eliminate the influence of dimensional variations of the battery 10 and the carrier 12.

## Claims

1. A battery holding structure comprising:
a battery (10) adapted to be mounted on a vehicle and including a brim (18) provided at a lower part thereof so as to protrude outward;
a carrier (12) including a main body (20) accommodating at least the lower part of the battery (10) and a flange (24) extends outward from an upper end of the main body (20); and
a clamp (14) for fixing the battery (10) to the carrier (12),
wherein
an upper surface of the brim (18) is an inclined surface (19) that extends downward and outward,
the clamp (14) includes
a first contacting part (30) that comes into contact with the inclined surface (19) positioned at one end in a first direction of the battery (10) and presses a bottom of the battery (10) against the carrier (12),
a first standing part (32) standing from the first contacting part (30), and
a fastening part (38) extending from the first standing part (32) so as to be overlapped with the flange (24) and fastened to the flange (24) at a position outside the battery (10) in the first direction,
wherein a normal line of the inclined surface (19) passing through a contact point (Pc) between the inclined surface (19) and the first contacting part (30) passes inside a fixing point (Ps) where the fastening part (38) is fixed to the flange (24) so as to be positioned on a battery side,
wherein
the first contacting part (30) extends from a lower end of the first standing part (32) at an angle closer to a horizontal direction than the inclined surface (19),
the fastening part (38) includes a fastening hole (42) through which a fastening bolt (50) can be inserted, and the fixing point (Ps) is a point closest to the battery (10) in a peripheral region of the fastening hole (42) and wherein the clamp (14) further includes
a second contacting part (34) that is configured to come into contact with the inclined surface (19) positioned at one end in a second direction orthogonal to the first direction and to press the bottom of the battery (10) against the carrier (12), and
a second standing part (36) that extends upward from the second contacting part (34) and is connected to the first standing part (32) so as to form an angle of approximately 90 degrees therebetween,
wherein the clamp (14) is not fastened to the carrier (12) at an outer side of the battery (10) in the second direction.

2. The battery holding structure according to claim 1, wherein
a placement part (28) that is inclined in such a way as to extend upward and outward in the first direction is provided at an outer end of the flange (24) in the first direction,
a abutment part (40) that is inclined in such a way as to extend upward and outward in the first direction is provided at an outer end of the fastening part (38) in the first direction, and
the clamp (14) is fastened to the carrier (12) in a state where the abutment part (40) is mounted on the placement part (28) and the fastening part (38) floats from the flange (24).

3. A battery holding structure comprising:
a battery (10) adapted to be mounted on a vehicle and including a brim (18) provided at a lower part thereof so as to protrude outward;
a carrier (12) including a main body (20) accommodating at least the lower part of the battery (10) and a flange (24) extends outward from an upper end of the main body (20); and
a clamp (14) for fixing the battery (10) to the carrier (12),
wherein
an upper surface of the brim (18) is an inclined surface (19) that extends downward and outward,
the clamp (14) includes
a first contacting part (30) that comes into contact with the inclined surface (19) positioned at one end in a first direction of the battery (10) and presses a bottom of the battery (10) against the carrier (12),
a first standing part (32) standing from the first contacting part (30), and
a fastening part (38) extending from the first standing part (32) so as to be overlapped with the flange (24) and fastened to the flange (24) at a position outside the battery (10) in the first direction,
wherein a normal line of the inclined surface (19) passing through a contact point (Pc) between the inclined surface (19) and the first contacting part (30) passes inside a fixing point (Ps) where the fastening part (38) is fixed to the flange (24) so as to be positioned on a battery side,
wherein the clamp (14) further includes
a second contacting part (34) that is configured to come into contact with the inclined surface (19) positioned at one end in a second direction orthogonal to the first direction and to press the bottom of the battery (10) against the carrier (12), and
a second standing part (36) that extends upward from the second contacting part (34) and is connected to the first standing part (32) so as to form an angle of approximately 90 degrees therebetween,
wherein
the fastening part (38) includes a fastening hole (42) through which a fastening bolt (50) can be inserted, and the fixing point (Ps) is a point closest to the battery (10) in a peripheral region of the fastening hole (42)
the clamp (14) is not fastened to the carrier (12) at an outer side of the battery (10) in the second direction,
and wherein
a placement part (28) that is inclined in such a way as to extend upward and outward in the first direction is provided at an outer end of the flange (24) in the first direction,
a abutment part (40) that is inclined in such a way as to extend upward and outward in the first direction is provided at an outer end of the fastening part (38) in the first direction, and
the clamp (14) is fastened to the carrier (12) in a state where the abutment part (40) is mounted on the placement part (28) and the fastening part (38) floats from the flange (24).

4. The battery holding structure according to claim 3, wherein the first contacting part (30) extends from a lower end of the first standing part (32) at an angle closer to a horizontal direction than the inclined surface (19)

## Patentansprüche

1. Batteriehalterungsstruktur, umfassend:
eine Batterie (10), die zur Anbringung an einem Fahrzeug geeignet ist und einen Rand (18) aufweist, der an einem unteren Teil derselben so vorgesehen ist, dass er nach außen vorsteht,
einen Träger (12) mit einem Hauptkörper (20), der zumindest den unteren Teil der Batterie (10) aufnimmt, und einem Flansch (24), der sich von einem oberen Ende des Hauptkörpers (20) nach außen erstreckt, und
eine Klemme (14) zur Befestigung der Batterie (10) am Träger (12),
wobei
eine obere Fläche des Randes (18) eine geneigte Fläche (19) ist, die sich nach unten und außen erstreckt,
die Klemme (14) umfasst
ein erstes Kontaktteil (30), das mit der geneigten Fläche (19), die an einem Ende in einer ersten Richtung der Batterie (10) angeordnet ist, in Kontakt kommt und einen Boden der Batterie (10) gegen den Träger (12) drückt,
ein erstes Standteil (32), das von dem ersten Kontaktteil (30) absteht, und
ein Befestigungsteil (38), das sich von dem ersten Standteil (32) so erstreckt, dass es mit dem Flansch (24) überlappt und an dem Flansch (24) an einer Position außerhalb der Batterie (10) in der ersten Richtung befestigt ist,
wobei eine Normallinie der geneigten Fläche (19), die durch einen Kontaktpunkt (Pc) zwischen der geneigten Fläche (19) und dem ersten Kontaktteil (30) verläuft, innerhalb eines Befestigungspunktes (Ps) verläuft, an dem das Befestigungsteil (38) an dem Flansch (24) so befestigt ist, dass es auf einer Batterieseite positioniert ist,
wobei
das erste Kontaktteil (30) sich von einem unteren Ende des ersten Standteils (32) in einem Winkel erstreckt, der näher an einer horizontalen Richtung liegt als die geneigte Fläche (19),
das Befestigungsteil (38) ein Befestigungsloch (42) aufweist, durch das ein Befestigungsbolzen (50) eingeführt werden kann, und der Befestigungspunkt (Ps) ein Punkt ist, der der Batterie (10) in einem Umfangsbereich des Befestigungslochs (42) am nächsten liegt.
und wobei die Klemme (14) ferner umfasst
ein zweites Kontaktteil (34), das so konfiguriert ist, dass es mit der geneigten Fläche (19) in Kontakt kommt, die an einem Ende in einer zweiten Richtung orthogonal zu der ersten Richtung positioniert ist, und den Boden der Batterie (10) gegen den Träger (12) drückt, und
ein zweites Standteil (36), das sich von dem zweiten Kontaktteil (34) nach oben erstreckt und mit dem ersten Standteil (32) so verbunden ist, dass es einen Winkel von ungefähr 90 Grad dazwischen bildet,
wobei die Klemme (14) nicht an dem Träger (12) an einer Außenseite der Batterie (10) in der zweiten Richtung befestigt ist.

2. Batteriehalterungsstruktur nach Anspruch 1, wobei
ein Platzierungsteil (28), das so geneigt ist, dass es sich in der ersten Richtung nach oben und nach außen erstreckt, an einem äußeren Ende des Flansches (24) in der ersten Richtung vorgesehen ist,
ein Anschlagteil (40), das so geneigt ist, dass es sich in der ersten Richtung nach oben und nach außen erstreckt, an einem äußeren Ende des Befestigungsteils (38) in der ersten Richtung vorgesehen ist, und
die Klammer (14) an dem Träger (12) in einem Zustand befestigt ist, in dem das Anschlagteil (40) auf dem Platzierungsteil (28) montiert ist und das Befestigungsteil (38) von dem Flansch (24) schwebt.

3. Batteriehalterungsstruktur, umfassend:
eine Batterie (10), die zur Anbringung an einem Fahrzeug geeignet ist und einen Rand (18) aufweist, der an einem unteren Teil derselben so vorgesehen ist, dass er nach außen vorsteht,
einen Träger (12) mit einem Hauptkörper (20), der zumindest den unteren Teil der Batterie (10) aufnimmt, und einem Flansch (24), der sich von einem oberen Ende des Hauptkörpers (20) nach außen erstreckt, und
eine Klemme (14) zur Befestigung der Batterie (10) am Träger (12),
wobei
eine obere Fläche des Randes (18) eine geneigte Fläche (19) ist, die sich nach unten und außen erstreckt,
die Klemme (14) umfasst
ein erstes Kontaktteil (30), das mit der geneigten Fläche (19), die an einem Ende in einer ersten Richtung der Batterie (10) angeordnet ist, in Kontakt kommt und einen Boden der Batterie (10) gegen den Träger (12) drückt,
ein erstes Standteil (32), das von dem ersten Kontaktteil (30) absteht, und
ein Befestigungsteil (38), das sich von dem ersten Standteil (32) so erstreckt, dass es mit dem Flansch (24) überlappt und an dem Flansch (24) an einer Position außerhalb der Batterie (10) in der ersten Richtung befestigt ist,
wobei eine Normallinie der geneigten Fläche (19), die durch einen Kontaktpunkt (Pc) zwischen der geneigten Fläche (19) und dem ersten Kontaktteil (30) verläuft, innerhalb eines Befestigungspunktes (Ps) verläuft, an dem das Befestigungsteil (38) an dem Flansch (24) so befestigt ist, dass es auf einer Batterieseite positioniert ist,
wobei die Klemme (14) ferner umfasst
ein zweites Kontaktteil (34), das so konfiguriert ist, dass es mit der geneigten Fläche (19) in Kontakt kommt, die an einem Ende in einer zweiten Richtung orthogonal zu der ersten Richtung positioniert ist, und den Boden der Batterie (10) gegen den Träger (12) drückt, und
ein zweites Standteil (36), das sich von dem zweiten Kontaktteil (34) nach oben erstreckt und mit dem ersten Standteil (32) so verbunden ist, dass es einen Winkel von ungefähr 90 Grad dazwischen bildet,
wobei
das Befestigungsteil (38) ein Befestigungsloch (42) enthält, durch das ein Befestigungsbolzen (50) eingeführt werden kann, und der Befestigungspunkt (Ps) ein Punkt ist, der der Batterie (10) in einem Umfangsbereich des Befestigungslochs (42) am nächsten liegt
die Klemme (14) nicht an dem Träger (12) an einer Außenseite der Batterie (10) in der zweiten Richtung befestigt ist,
und wobei
ein Platzierungsteil (28), das so geneigt ist, dass es sich in der ersten Richtung nach oben und nach außen erstreckt, an einem äußeren Ende des Flansches (24) in der ersten Richtung vorgesehen ist,
ein Anschlagteil (40), das so geneigt ist, dass es sich in der ersten Richtung nach oben und nach außen erstreckt, an einem äußeren Ende des Befestigungsteils (38) in der ersten Richtung vorgesehen ist, und
die Klammer (14) an dem Träger (12) in einem Zustand befestigt ist, in dem der Anschlagteil (40) auf dem Platzierungsteil (28) montiert ist und der Befestigungsteil (38) von dem Flansch (24) schwebt.

4. Batteriehalterungsstruktur nach Anspruch 3, wobei sich das erste Kontaktteil (30) von einem unteren Ende des ersten Standteils (32) in einem Winkel näher zu einer horizontalen Richtung als die geneigte Fläche (19) erstreckt.

## Revendications

1. Structure de maintien de batterie comprenant :
une batterie (10) prévue pour être montée sur un véhicule et comprenant un bord (18) prévu au niveau d'une partie inférieure de façon à dépasser à l'extérieur ;
un support (12) comprenant un corps principal (20) qui reçoit au moins la partie inférieure de la batterie (10) et un rebord (24) s'étend vers l'extérieur depuis une extrémité supérieure du corps principal (20) ; et
une bride (14) destinée à fixer la batterie (10) sur le support (12),
dans laquelle
une surface supérieure du bord (18) est une surface inclinée (19) qui s'étend vers le bas et vers l'extérieur,
la bride (14) comprend
une première partie de contact (30) qui vient en contact avec la surface inclinée (19) positionnée à une extrémité dans une première direction de la batterie (10) et appuie un fond de la batterie (10) contre le support (12),
une première partie dressée (32) qui se dresse depuis la première partie de contact (30), et
une partie de fixation (38) qui s'étend depuis la première partie dressée (32) de façon à être chevauchée par le rebord (24) et fixée sur le rebord (24) dans une position à l'extérieur de la batterie (10) dans la première direction,
dans laquelle
une ligne normale de la surface inclinée (19) qui passe par un point de contact (Pc) entre la surface inclinée (19) et la première partie de contact (30) passe à l'intérieur d'un point de fixation (Ps) où la partie de fixation (38) est fixée sur le rebord (24) de façon à être positionnés sur un côté de batterie,
dans laquelle
la première partie de contact (30) s'étend depuis une extrémité inférieure de la première partie dressée (32) avec un angle plus proche d'une direction horizontale que la surface inclinée (19),
la partie de fixation (38) comprend un trou de fixation (42) à travers lequel un boulon de fixation (50) peut être inséré, et le point de fixation (Ps) est un point le plus proche de la batterie (10) dans une région périphérique du trou de fixation (42),
et dans laquelle la bride (14) comprend en outre
une deuxième partie de contact (34) qui est configurée pour venir en contact avec la surface inclinée (19) positionnée à une extrémité dans une deuxième direction perpendiculaire à la première direction et pour appuyer le fond de la batterie (10) contre le support (12), et
une deuxième partie dressée (36) qui s'étend vers le haut depuis la deuxième partie de contact (34) et est reliée à la première partie dressée (32) de façon à former entre elles un angle d'approximativement 90 degrés,
la bride (14) n'étant pas fixée sur le support (12) sur un côté extérieur de la batterie (10) dans la deuxième direction.

2. Structure de maintien de batterie selon la revendication 1, dans laquelle
une partie de placement (28) qui est inclinée de manière à s'étendre vers le haut et vers l'extérieur dans la première direction est prévue au niveau d'une extrémité extérieure du rebord (24) dans la première direction,
une partie de butée (40) qui est inclinée de manière à s'étendre vers le haut et vers l'extérieur dans la première direction est prévue au niveau d'une extrémité extérieure de la partie de fixation (38) dans la première direction, et
la bride (14) est fixée sur le support (12) dans un état où la partie de butée (40) est montée sur la partie de placement (28) et la partie de fixation (38) flotte par rapport au rebord (24).

3. Structure de maintien de batterie comprenant :
une batterie (10) prévue pour être montée sur un véhicule et comprenant un bord (18) prévu au niveau d'une partie inférieure de façon à dépasser à l'extérieur ;
un support (12) comprenant un corps principal (20) qui reçoit au moins la partie inférieure de la batterie (10) et un rebord (24) s'étend vers l'extérieur depuis une extrémité supérieure du corps principal (20) ; et
une bride (14) destinée à fixer la batterie (10) sur le support (12),
dans laquelle
une surface supérieure du bord (18) est une surface inclinée (19) qui s'étend vers le bas et vers l'extérieur,
la bride (14) comprend
une première partie de contact (30) qui vient en contact avec la surface inclinée (19) positionnée à une extrémité dans une première direction de la batterie (10) et appuie un fond de la batterie (10) contre le support (12),
une première partie dressée (32) qui se dresse depuis la première partie de contact (30), et
une partie de fixation (38) qui s'étend depuis la première partie dressée (32) de façon à être chevauchée par le rebord (24) et fixée sur le rebord (24) dans une position à l'extérieur de la batterie (10) dans la première direction,
dans laquelle une ligne normale de la surface inclinée (19) qui passe par un point de contact (Pc) entre la surface inclinée (19) et la première partie de contact (30) passe à l'intérieur d'un point de fixation (Ps) où la partie de fixation (38) est fixée sur le rebord (24) de façon à être positionnés sur un côté de batterie,
dans laquelle la bride (14) comprend en outre
une deuxième partie de contact (34) qui est configurée pour venir en contact avec la surface inclinée (19) positionnée à une extrémité dans une deuxième direction perpendiculaire à la première direction et pour appuyer le fond de la batterie (10) contre le support (12), et
une deuxième partie dressée (36) qui s'étend vers le haut depuis la deuxième partie de contact (34) et est reliée à la première partie dressée (32) de façon à former entre elles un angle d'approximativement 90 degrés,
dans laquelle
la partie de fixation (38) comprend un trou de fixation (42) à travers lequel un boulon de fixation (50) peut être inséré, et le point de fixation (Ps) est un point le plus proche de la batterie (10) dans une région périphérique du trou de fixation (42),
la bride (14) n'est pas fixée sur le support (12) sur un côté extérieur de la batterie (10) dans la deuxième direction,
et dans laquelle
une partie de placement (28) qui est inclinée de manière à s'étendre vers le haut et vers l'extérieur dans la première direction est prévue au niveau d'une extrémité extérieure du rebord (24) dans la première direction,
une partie de butée (40) qui est inclinée de manière à s'étendre vers le haut et vers l'extérieur dans la première direction est prévue au niveau d'une extrémité extérieure de la partie de fixation (38) dans la première direction, et
la bride (14) est fixée sur le support (12) dans un état où la partie de butée (40) est montée sur la partie de placement (28) et la partie de fixation (38) flotte par rapport au rebord (24).

4. Structure de maintien de batterie selon la revendication 3, dans laquelle la première partie de contact (30) s'étend depuis une extrémité inférieure de la première partie dressée (32) avec un angle plus proche d'une direction horizontale que la surface inclinée (19).
